# EUROPEAN PATENT APPLICATION

(11) **EP 2 720 429 A1**
(43) Date of publication of application: **16.04.2014**
(21) Application number: 12306271.3
(22) Date of filing: 15.10.2012
(51) Int. Cl.: H04L 29/06, H04W 88/08

(54) **Apparatuses, methods and computer programs for a remote unit and a central unit of a Base Station**

(71) Applicant: Alcatel Lucent, 75007 Paris (FR)
(72) Inventor: Conte, Alberto, 91620 Nozay (FR); Portolan, Michele, 91620 Nozay (FR)
(74) Representative: 2SPL Patentanwälte

(57) **Abstract**

Embodiments provide apparatuses, methods and computer programs for a remote unit 100 and a central unit 200 of a base station transceiver 300. The remote unit apparatus 10 comprises means for communicating 12 with the central unit 200 of the base station transceiver 300 using a data stream. The remote unit apparatus 10 further comprises means for identifying 14 a recurring data pattern in the data stream and means for replacing 16 the recurring data pattern with a recurring data pattern identifier in the data stream. The central unit apparatus 20 comprises means for communicating 22 with the remote unit 100 of the base station transceiver 300 using a data stream. The central unit apparatus 20 further comprises means for identifying 24 a recurring data pattern identifier in the data stream and means for replacing 26 the recurring data pattern identifier with a recurring data pattern in the data stream.

## Description

Embodiments of the present invention relate to data transmission and reception, more particularly but not exclusively to data communication between components of an access network of a mobile communication system.

### Background

Demands for higher data rates for mobile services are steadily increasing. At the same time modem mobile communication systems as 3rd Generation systems (3G) and 4th Generation systems (4G) provide enhanced technologies, which enable higher spectral efficiencies and allow for higher data rates and cell capacities. The mobile communication infrastructure becomes more and more dense. The conventional base station transceiver in wireless communication systems like the Universal Mobile Telecommunication System (UMTS) and Long Term Evolution (LTE) system can be split in two separate units, a Remote Unit (RU), which is also referred to as Remote Radio Head (RRH), and a Central Unit (CU), connected either by electrical or optical links through a backhaul network.

The RU comprises a Radio Frequency (RF) frontend, i.e. analog transmit and receive RF components. For the UpLink (UL) path the RU comprises a receive antenna, which can be reused as transmit antenna for the DownLink (DL) signals. Moreover, in the uplink path the RU comprises filters corresponding to the uplink bandwidth and frequency as well as a Low Noise Amplifier (LNA). In the downlink path, the respective downlink filters are comprised together with a Power Amplifier (PA) and a transmit antenna, which can be identical with the receive antenna of the uplink path.

Traditionally, time domain complex valued samples, which are also referred to as Inphase (I) and Quadrature (Q) components, are exchanged between RRH and baseband processing located at the CU. The transmission of samples, typically in IQ format, or any higher abstraction, between the Analog/Digital/Analog (A/D/A) converters and Digital Signal Processing (DSP) components is a key element in radio systems. In modem cellular base stations A/D/A converters are part of the Radio Head (RH) elements, while DSP components are part of the so-called Base Band Unit (BBU) located at the CU. Traditionally, both A/D/A and DSPs are hosted on the same chip/board, making this transmission straightforward. However, technological evolution is changing this because of two main factors. Firstly, the widespread usage of RRHs, which move the A/D/A as close as possible to the actual antenna and secondly, the centralization and delocalization of DSP functions (base band processing), which can be carried out far away from the actual antennas. This can be seen as a key-factor in approaches like Virtual Radio Access Networks (VRAN) or Cloud RAN (CRAN).

### Summary

It is a finding that the data amount and the data rate communicated between a remote unit and a central unit of a mobile communication system become more and more scarce, in particular with the increasing number of remote units being connected to a central unit. As such systems use enhanced transmission concepts such as Multiple-Input-Multiple-Output (MIMO) transmission and COoperative MultiPoint (COMP) transmission more and more, the data amount being exchanged between a remote unit and a central unit is growing. As a result, there is a desire for techniques and concepts for enhancing the transmission concepts between these components as well.

It is a further finding that the intrinsic regularity of radio communications to detect recurrent patterns can be exploited. The Transmitting (Tx) side can then just signal the occurrence of one of these patterns, which can be generated locally by the Receiving (Rx) side. This may result in a significant reduction of the data needed to be transported between A/D/A and DSP (in both directions), with a low or even limited resource usage and therefore a low or minimal impact in terms of elaboration time. The pattern detection/reconstitution blocks can be implemented in a simple manner, and therefore only short or even minimal delays may be added.

Embodiments provide an apparatus for a remote unit of a base station transceiver in a mobile communication system. The apparatus can be comprised or included in the remote unit of the base station transceiver. The apparatus will also be referred to as remote unit apparatus subsequently. Embodiments may also provide a base station transceiver comprising a remote unit apparatus. The base station transceiver may comprise a central unit and the remote unit. The remote unit apparatus comprises means for communicating with the central unit of the base station transceiver using a data stream. The means for communicating may correspond to a communicator. In embodiments the means for communicating can be implemented as an interface between the central unit and the remote unit. For example, such interface may be a wireless or a wired interface (e.g. Ethernet). In some embodiments the means for communicating may comprise further components, for example, for converting the data stream in a different format or to a different access medium, such as electrical or optical conversion for transmitting or communicating the data stream using an optical signal. Hence, the means for communicating may use wireline transmission, according signal processing units may be comprised in the means for communicating. Here and subsequently all "means" may correspond to one or more modules, one or more devices, or one or more units, which are adapted or operable to perform the corresponding functions or steps. For example, the means for communicating may comprise or be implemented as a device, a module, or unit, which is operable to communicate with the central unit.

The data stream may correspond to any stream of data. In some embodiments the data may be binary. Data may be subdivided in groups of data or blocks of data. Such groups or blocks may also be referred to as packets or data packets. Hence, the data stream may correspond to a sequence of subsequent blocks or packets of data.

The mobile communication system may, for example, correspond to one of the mobile communication systems standardized by the 3^{rd} Generation Partnership Project (3GPP), as Global System for Mobile Communications (GSM), Enhanced Data rates for GSM Evolution (EDGE), GSM EDGE Radio Access Network (GERAN), Universal Terrestrial Radio Access Network (UTRAN) or Evolved UTRAN (E-UTRAN), Long Term Evolution (LTE) or LTE-Advanced (LTE-A), or mobile communication systems with different standards, e.g. Worldwide Interoperability for Microwave Access (WIMAX) IEEE 802.16 or Wireless Local Area Network (WLAN) IEEE 802.11, generally any system based on Time Division Multiple Access (TDMA), Frequency Division Multiple Access (FDMA), Orthogonal Frequency Division Multiple Access (OFDMA), Code Division Multiple Access (CDMA), etc. In the following the terms mobile communication system and mobile communication network are used synonymously.

The mobile communication system may comprise a plurality of transmission points or base station transceivers operable to communicate radio signals with a mobile transceiver. In embodiments, the mobile communication system may comprise mobile transceivers and base station transceivers. A mobile transceiver may correspond to a smartphone, a cell phone, user equipment, a laptop, a notebook, a personal computer, a Personal Digital Assistant (PDA), an Universal Serial Bus (USB) -stick, a car, etc. A mobile transceiver may also be referred to as User Equipment (UE) or user in line with the 3GPP terminology. A base station transceiver can be located in the fixed or stationary part of the network or system. A base station transceiver may correspond to a remote radio head, a transmission point, an access point, a macro cell, a small cell, a micro cell, a femto cell, a metro cell etc. A base station transceiver can be a wireless interface of a wired network, which enables transmission of radio signals to a UE or mobile transceiver. Such a radio signal may comply with radio signals as, for example, standardized by 3GPP or, generally, in line with one or more of the above listed systems. Thus, a base station transceiver may correspond to a NodeB, an eNodeB, a BTS, an access point, etc.

The mobile communication system may thus be cellular. The term cell refers to a coverage area of radio services provided by a transmission point, a remote unit, an RH, an RRH, a base station transceiver or a NodeB, an eNodeB, respectively. In some embodiments a cell may correspond to a sector. For example, sectors can be achieved using sector antennas, which provide a characteristic for covering an angular section around a base station transceiver. In some embodiments, a base station transceiver may, for example, operate three or six cells covering sectors of 120° (in case of three cells), 60° (in case of six cells) respectively. A mobile transceiver can be registered or associated with a cell, i.e. it can be associated to a cell such that data can be exchanged between the network and the mobile in the coverage area of the associated cell using a dedicated channel, link or connection.

The remote unit apparatus further comprises means for identifying a recurring data pattern in the data stream. The means for identifying can correspond to an identifier. In some embodiments the means for identifying may correspond to a computer program and corresponding hardware for executing the computer program, having a program code for identifying the recurring data pattern in the data stream. In other words the means for identifying may be implemented as a processor, for example, a multi-purpose processor or a Digital Signal Processor (DSP), which is operable to execute an according computer program. The remote unit apparatus further comprises means for replacing the recurring data pattern with a recurring data pattern identifier in the data stream. The means for replacing may be implemented as a replacer. In line with what was said above, the means for replacing may be implemented as a computer program and correspondingly adapted hardware for executing the computer program. The means for replacing may then monitor the data stream and e.g. the program code may be adapted for identifying the recurring data pattern. In other words, the means for replacing may be operable to carry out data inspection on the data stream.

In another embodiment, part of the means of replacing can be implemented in hardware, such as programmable logic like Field-Programmable Gate Arrays (FPGAs) or Application-Specific Integrated Circuits (ASICs).

In embodiments the recurring data pattern may correspond to a sequence of data samples or data symbols of a radio signal in the transmission band or in the baseband. For example, the remote unit apparatus may receive data packets from one or more mobile transceivers transmitting said radio signals in the uplink. The remote apparatus, its corresponding means, respectively, can be operable to receive the corresponding radio signals from the mobile transceivers. Hence, in embodiments the remote unit apparatus may comprise receiver components, such as receive antennas. Moreover, it may comprise one or more filters, a low noise amplifier, a mixer, a local oscillator, etc. Moreover, the remote unit apparatus may comprise an Analog/Digital (A/D) converter for generating samples of the radio signal.

The samples may represent a transmission band signal or a base band signal. For example, the samples may correspond to complex valued samples in the base band. The means for communicating can be operable to communicate the data samples as part of the data stream to the central unit; the means for identifying may carry out data inspection and identify a recurring data pattern in the data stream. If such a recurring data pattern is identified in the data stream, the means for replacing may replace said identified recurring data pattern with an identifier, where the identifier uses less data than the recurring data pattern itself. By communicating the identifier instead of the recurring data pattern itself to the central unit, transmission bandwidth or data rate can be saved or conserved.

In the opposite direction, i.e. in the downlink, the remote unit apparatus can be operable to transmit radio signals to one or more mobile transceivers. In other words, the remote unit apparatus may comprise transmitter components, such as one or more filters, a mixer, a local oscillator, a power amplifier, one or more transmit antennas, etc. In some embodiments base band data may be received from the central unit, which is then converted to the transmission band. In other embodiments, a sampled transmission band signal may be received from the central unit. In such embodiments, the remote unit apparatus may not comprise converting means for converting the data stream received from the central unit to the transmission band, as such conversion has already been carried out at the central unit.

In embodiments, the remote unit apparatus may receive the data stream from the central unit for downlink data transmission to the one or more mobile transceivers. The remote unit apparatus may comprise means for identifying an identifier for a recurring data pattern in the data stream, which is received from the central unit. Moreover, the remote unit apparatus may comprise means for placing the recurring data pattern in the data stream based on the identifier. In other words, identifiers for recurring data patterns may be used in the opposite direction, where the central unit communicates a data stream to the remote unit. Once such an identifier is identified in the data stream, the remote unit apparatus, its corresponding means, respectively, can be operable to replace the identifier with the actual recurring data pattern. The recurring data pattern may be stored in a lookup table, i.e. the remote unit apparatus may comprise an according memory, which is used to map an actual recurring data pattern to its identifier.

Such an assignment or mapping table may be predetermined. In some embodiments the remote unit may monitor the data stream, anonymously identify a recurring data pattern, store the identified data pattern in the memory, and further communicate the according identifier back to the central unit. In other embodiments, the central unit may communicate an identifier for a certain recurring data pattern to the remote unit, such that the remote unit apparatus can store the identifier and the pattern in the memory.

In embodiments the recurring data pattern may correspond to one of various patterns, which are part of a radio signal and which are repetitive. In embodiments, the recurring data pattern can be a basis for one of or a combination of the group of a pilot channel, a reference channel, a synchronization channel, a broadcast channel, or a data channel with broadcast or multicast content. Such a channel may correspond to a certain sequence in the data stream.

In some embodiments the remote unit apparatus may comprise means for converting the data stream from a digital signal to an analog signal before transmitting the analog signal as a radio signal. In other words, the remote unit apparatus, the means for communicating, respectively, may receive digital data from the central unit. The remote unit apparatus may then comprise further means, one or more devices, one or more units, or one or more units to convert the digital data received from the central unit to a corresponding radio signal, which can be transmitted to the mobile transceivers wirelessly. In further embodiments the remote unit apparatus may comprise means for converting a received analog radio signal into a digital signal, in line with the above description. The means for communicating can then be operable to communicate at least parts of the digital signal to the central unit.

In other words some of the digital signal, which was generated based on the received radio signal, may not be communicated to the central unit. In particular, recurring data patterns in the digital signal may be replaced with corresponding identifiers, which may then be communicated to the central unit instead of the recurring data pattern. In line with the above description the remote unit apparatus, the means for communicating, respectively, can be operable to communicate with the central unit using an optical signal. In some embodiments a Common Public Radio Interface (CPRI) may be used for this purpose.

Embodiments further provide an apparatus for a central unit of a base station transceiver in a mobile communication system. That is to say the apparatus may be comprised or included in the central unit of the base station transceiver. The apparatus for the central unit may also be referred to as central unit apparatus subsequently. Embodiments may also provide a base station transceiver comprising a central unit apparatus. The central unit apparatus comprises means for communicating with the remote unit of the base station transceiver using a data stream. In line with the above, the means for communicating can be implemented as a communicator, as one or more modules, one or more devices, or one or more units operable to communicate with the remote unit. In line with the above, the central unit apparatus may comprise means for identifying a recurring data pattern identifier in the data stream. The means for identifying may correspond to a computer program which is executed on corresponding hardware, such as a processor, a DSP, a multipurpose processor, etc. In other words, the central unit apparatus is operable to receive the data stream from the remote unit apparatus and to identify the recurring data pattern identifier within the data stream. The central unit apparatus further comprises means for replacing the recurring data pattern identifier with a recurring data pattern in the data stream. The means for replacing can be implemented as a replacer, i.e. as one or more modules, one or more devices, or one or more units operable to replace the recurring data pattern identifier with the corresponding recurring data pattern in the data stream.

In line with the above description, the central unit apparatus can be operable to use identifiers for recurring data patterns for uplink and downlink transmission. Hence, the central unit apparatus may comprise means for identifying a recurring data pattern in the data stream. Moreover, the central unit apparatus may comprise means for placing the recurring data identifier for the recurring data pattern in the data stream. In line with what was said above the recurring data pattern may correspond to a sequence of data samples. In some embodiments the recurring data pattern can be a basis for one of or a combination of the group of a pilot channel, a reference channel, a synchronization channel, a broadcast channel, or a data channel with broadcast or multicast content.

Furthermore, in embodiments the central unit apparatus may comprise means for base band processing the data stream. In line with what was described above, the central unit may carry out at least some of the baseband processing involved with the protocol stack of the mobile communication standard. Hence, the means for base band processing may correspond to one or more processors, such as DSPs or other processors. The data stream may correspond to a digitalized radio signal. The means for communicating can be operable to communicate with the remote unit using an optical signal. For example, CPRI may be used for this purpose.

Embodiments further provide a method for a remote unit of a base station transceiver in a mobile communication system. The base station transceiver may comprise the central unit and the remote unit. The method comprises communicating with the central unit of the base station transceiver using a data stream. The method further comprises identifying a recurring data pattern in the data stream and replacing the recurring data pattern with a recurring data pattern identifier in the data stream.

Embodiments further provide a method for a central unit of the base station transceiver in a mobile communication system. The base station transceiver may comprise the central unit and the remote unit. The method comprises communicating with the remote unit of the base station transceiver using a data stream. The method further comprises identifying a recurring data pattern identifier in the data stream and replacing the recurring data pattern identifier with a recurring data pattern in the data stream.

Moreover, embodiments provide a computer program having a program code for performing one of the above-described methods, when the computer program is executed on a computer or a processor.

Embodiments may provide the advantage that gains in terms of transmission bandwidth between A/D/A (e.g. residing in the RRH) and the DSPs (in the BBU) may be enabled. Implementations of embodiments may be flexible and lightweight. In some embodiments "pauses" in transmission between symbols may have a beneficial impact against traffic congestion.

In addition, embodiments may participate in improving the energy efficiency of cellular base stations, when no user data is transmitted (e.g. an empty cell). In this case only regular well-known signals may be transmitted, such as pilots, Broadcast CHannel (BCH), etc. Thus the traffic on the RRH-BBU link can be reduced or, in some embodiments, even completely suppressed and generated locally by the RRH. In this case, the BBU module may enter a standby mode and allow further energy savings.

IQ compression is a "brute force" approach which needs significant computing power and directly impacts the data transmission delay, while maintaining the communication pipe always active. In contrast, embodiments may be smartly tailored to suit the system needs and may lower significantly the stress on the transmission medium.

### Brief Description of the Figures

Some other features or aspects will be described using the following non-limiting embodiments of apparatuses and/or methods and/or computer programs by way of example only, and with reference to the accompanying Figures, in which
- Fig. 1: illustrates an embodiment of an apparatus for a remote unit and an embodiment of an apparatus for a central unit;
- Fig. 2: shows a system overview of an embodiment of a base station transceiver;
- Fig. 3: illustrates communication in an embodiment with exemplified signals;
- Fig. 4: illustrates communication in an embodiment using data compression with exemplified signals;
- Fig. 5: depicts another embodiment using pattern detection in the uplink;
- Fig. 6: depicts another embodiment using pattern detection in the downlink;
- Fig. 7: shows some possible architectural options for embodiments of or within base stations;
- Fig. 8: shows the structure of an LTE radio frame in an embodiment;
- Fig. 9: shows a block diagram of an embodiment of a method for a remote unit; and
- Fig. 10: shows a block diagram of an embodiment of a method for a central unit.

### Description of Some Embodiments

Various embodiments will now be described in more detail with reference to the accompanying drawings. In the figures, the thicknesses of lines, layers and/or regions may be exaggerated for clarity.

Accordingly, while embodiments are capable of various modifications and alternative forms, embodiments thereof are shown by way of example in the figures and will herein be described in detail. It should be understood, however, that there is no intent to limit embodiments to the particular forms disclosed, but on the contrary, embodiments are to cover all modifications, equivalents, and alternatives falling within the scope of the invention. Like numbers refer to like or similar elements throughout the description of the figures.

It will be understood that when an element is referred to as being "connected" or "coupled" to another element, it can be directly connected or coupled to the other element or intervening elements may be present. In contrast, when an element is referred to as being "directly connected" or "directly coupled" to another element, there are no intervening elements present. Other words used to describe the relationship between elements should be interpreted in a like fashion (e.g., "between" versus "directly between," "adjacent" versus "directly adjacent," etc.).

The terminology used herein is for the purpose of describing particular embodiments only and is not intended to be limiting of example embodiments. As used herein, the singular forms "a," "an" and "the" are intended to include the plural forms as well, unless the context clearly indicates otherwise. It will be further understood that the terms "comprises," "comprising," "includes" and/or "including," when used herein, specify the presence of stated features, integers, steps, operations, elements and/or components, but do not preclude the presence or addition of one or more other features, integers, steps, operations, elements, components and/or groups thereof.

Unless otherwise defined, all terms (including technical and scientific terms) used herein have the same meaning as commonly understood by one of ordinary skill in the art to which embodiments belong. It will be further understood that terms, e.g., those defined in commonly used dictionaries, should be interpreted as having a meaning that is consistent with their meaning in the context of the relevant art and will not be interpreted in an idealized or overly formal sense unless expressly so defined herein.

In the following description some components will be displayed in multiple figures carrying the same reference signs, but may not be described multiple times in detail. A detailed description of a component may then apply to that component for all its occurrences.

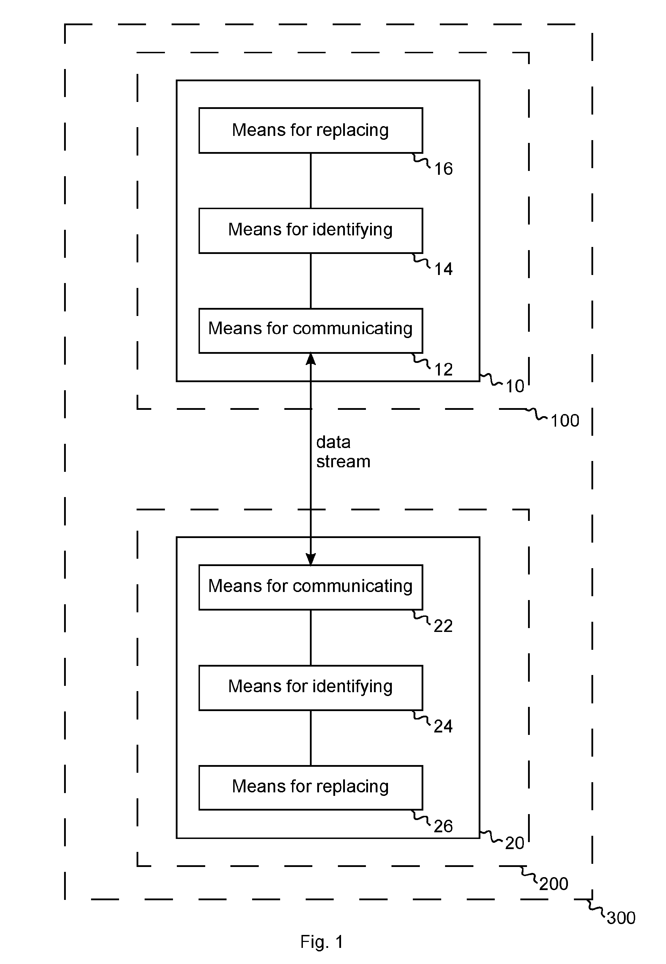

In the following figures optional components are shown in dashed lines. Fig. 1 shows an embodiment of an apparatus 10 for a remote unit 100 of a base station transceiver 300 in a mobile communication system. The mobile communication system can be assumed to be an LTE system. The base station transceiver 300 comprises a central unit 200 and the remote unit 100. The remote unit apparatus 10 comprises means for communicating 12 with the central unit 200 of the base station transceiver 300 using a data stream. The remote unit apparatus further comprises means for identifying 14 a recurring data pattern in the data stream and means for replacing 16 the recurring data pattern with a recurring data pattern identifier in the data stream. The means for communicating 12, the means for identifying 14, and the means for replacing 16 can be coupled to each other.

Fig. 1 further shows an embodiment of an apparatus 20 for a central unit 200 of a base station transceiver 300 in a mobile communication system. The base station transceiver 300 may comprise the central unit 200 and a remote unit 100. The central unit apparatus 10 comprises means for communicating 22 with the remote unit 100 of the base station transceiver 300 using a data stream. The central unit apparatus 20 further comprises means for identifying 24 a recurring data pattern identifier in the data stream and means for replacing 26 the recurring data pattern identifier with a recurring data pattern in the data stream.

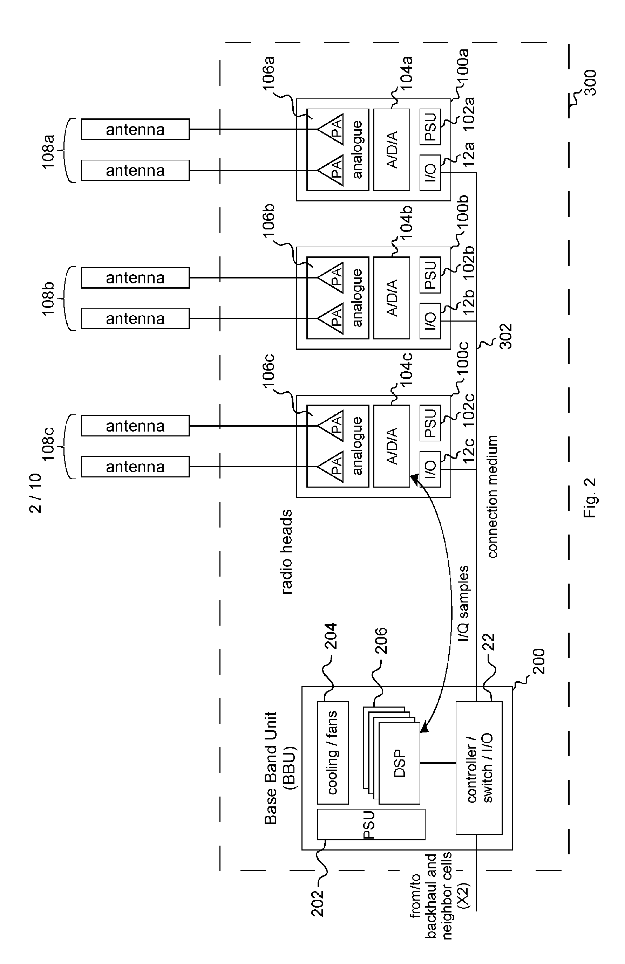

Fig. 2 shows a system overview of an embodiment of a base station transceiver 300. The base station transceiver 300 comprises a central unit 200 and three remote units 100a, 100b, and 100c. The central unit 200 is implemented as BBU and comprises a Power Supply Unit (PSU) 202 and one or more cooling or fan devices 204. Moreover, the central unit 200 comprises, as part of a central unit apparatus, means for communicating 22, which are implemented as a controller, switch or Input/Output (I/O) port. The means for communicating 22 is further operable to communicate with a backhaul network or other base station transceivers (neighbor cells), e.g. establishing an "X2" interface. The central unit 200 comprises one or more DSPs 206, which are used to implement the means for identifying 24 and the means for replacing 26 in line with Fig. 1.

Fig. 2 depicts three remote units or radio heads 100a, 100b, and 100c, which are shown to be similar in Fig. 2, in other embodiments they may differ from each other in one or more components, e.g. they may operate different numbers of antennas. Each of the remote unit 100 comprises a PSU 102a, 102b, and 102c, and an A/D/A 104a, 104b, and 104c. In each remote unit 100a, 100b, and 100c, there is an analogue processing part 106a, 106b, and 106c, between the A/D/A 104a, 104b, and 104c, and antennas 108a, 108b, and 108c. The antennas 108a, 108b, and 108c serve as transmit and receive antennas in the present embodiment. Each of the analogue processing parts 106a, 106b, and 106c comprises one or more Power Amplifiers (PAs). Furthermore, each remote unit 100a, 100b, 100c comprises means for communicating 12a, 12b, and 12c, which are implemented as I/O interfaces or ports, which are connected to the means for communicating 22 at the central unit 200 using an according connection medium 302, such as an optical fiber. The central unit 200 and the remote units 100a, 100b, and 100c, exchange I/Q samples using the connection medium 302. Fig. 2 provides a simplified overview. In the following and without loss of generality, focus will be on the A/D/A 104abc to DSP 206, and vice versa, communication.

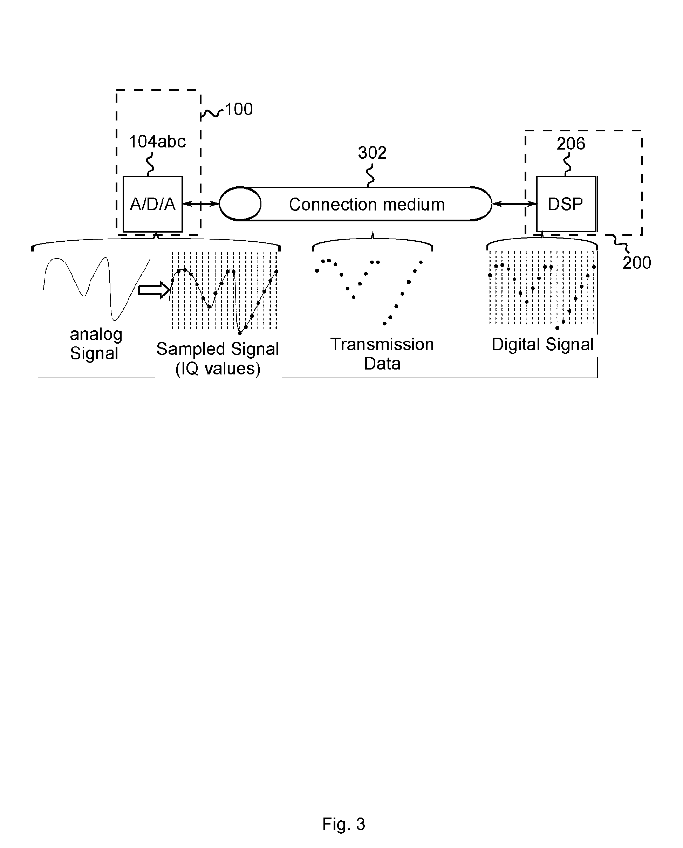

Fig. 3 illustrates communication between the A/D/As 104abc and the DSP 206 through the connection medium 302 in an embodiment with exemplified signals. First, the general signal processing will be explained in the uplink direction, where an analog signal is received at the remote unit 100abc and digitalized into a sampled signal comprising IQ values. Data on the sampled signal is transmitted using the connection medium 302 to the DSP 206, which then obtains the digital signal. In the conventional system even if great advantages may be offered by the architecture, the network can be put under serious stress. For instance, the bandwidth needed for a single LTE antenna working at 10MHz can be estimated to be around 168Mbps, with strict constraints on transmission delays and Quality of Service (QoS).

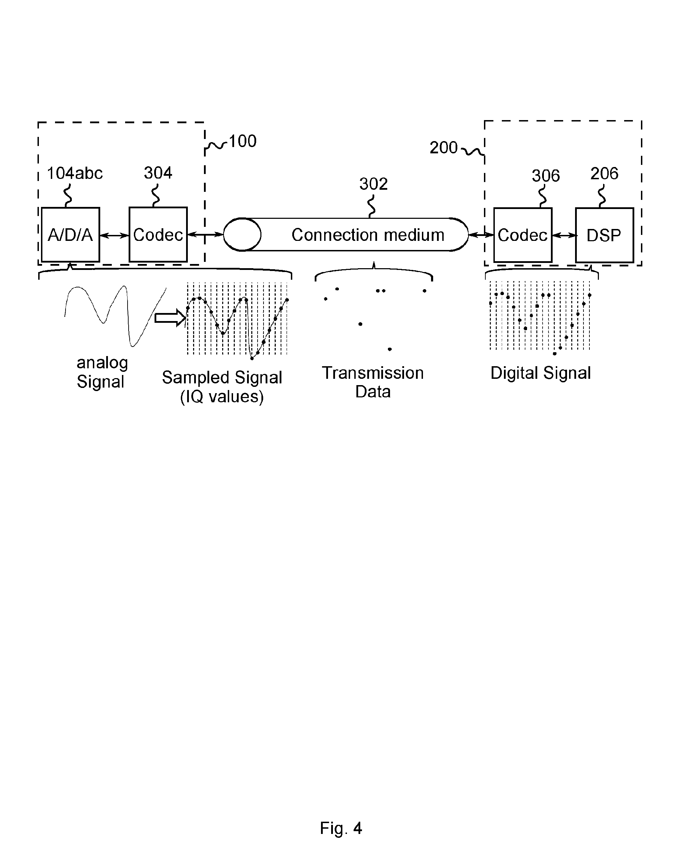

One concept, which may be used in embodiments, is data compression to lower the transmission bandwidth in the connection medium 302. Fig. 4 illustrates communication between the A/D/As 104abc and the DSP 206 through the connection medium 302 in an embodiment using data compression with exemplified signals. The system shown in Fig. 4 further comprises a data de-/compressor or codec 304 on the remote unit's 100 side and a corresponding data de-/compressor or codec 306 on the central unit's 200 side. The codecs 304 and 306 may enable data compression in both transmission directions. As it can be seen from Fig. 4 the signal processing in the uplink start in a similar way as it was explained above for Fig. 3. The analog receive signal is digitalized into a signal of sampled IQ values, which are compressed, i.e. not all of these values are transmitted as part of the transmission data. At the central unit 200 the codec 306 can reconstruct the digital signal using decoding or decompression techniques associated with the codec 304 at the remote unit 100abc. The data compression may have good results, for example, some LightRadio embodiments may offer 3x data reduction over a CPRI link, but at the price of additional computational complexity at the remote unit 100abc and the central unit 200. Also, the additional compression/decompression time may have a direct negative impact on transmission delays.

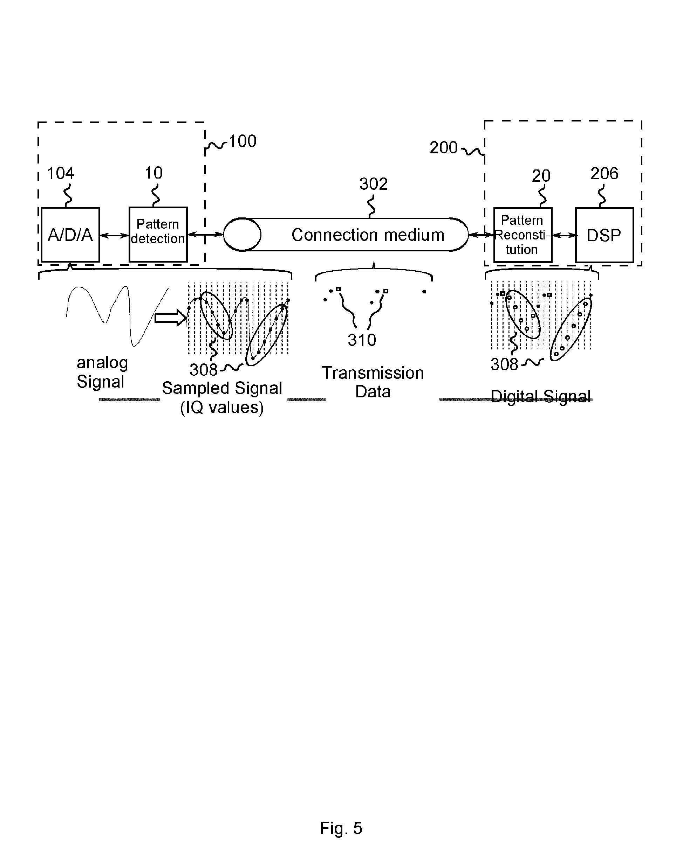

Fig. 5 illustrates another embodiment using pattern detection in the uplink. Fig. 5 shows an A/D converter 104 at the remote unit 100, which comprises the above-described remote unit apparatus 10. The A/D converter 104 generates a sampled signal comprising the IQ values in line with the above and provides the sampled signal to the remote unit apparatus 10. In the present embodiment the A/D converter 104 is shown outside the remote unit apparatus 10. In other embodiments the remote unit apparatus 10 may comprise means for converting a received analog radio signal into a digital signal, such as the A/D converter 104 shown in Fig. 5. The remote unit apparatus 10 uses the means for identifying 14 to identify a recurring data pattern 308 in the sampled signal. The recurring pattern 308 corresponds to a sequence of data samples of a radio signal in the transmission band or in the base band. For example, the recurring pattern 308 is basis for one of or a combination of the group of a pilot channel, a reference channel, a synchronization channel, a broadcast channel, or a data channel with broadcast or multicast content. The means for communicating 12, which is not explicitly shown in Fig. 5 is operable to communicate at least parts of the digital signal to the central unit 200. In the present embodiment it is assumed that the means for communicating 12 is operable to communicate with the central unit 200 using an optical signal.

In line with the illustration of the sampled values the recurring pattern 308 are identified and replaced by identifiers 310, which allow a reverse replacement, i.e. the replacement of the identifier 310 with the corresponding recurring pattern 308 at the central unit 200. This is indicated by the square identifiers 310 in Fig. 5, which replace a sequence of samples 308 in the sampled signal within the transmission data. The central unit 200 comprises the above described central unit apparatus 20 with the means for communicating, i.e. for receiving the data stream with the identifiers 310 in the present embodiment. In line with the above, the identifiers 310 are identified by the means for identifying 24 and replaced with the corresponding recurring data pattern 308 by the means for replacing 26, as indicated by the illustration of the reconstructed signal in Fig. 5. In line with the above the recurring data pattern 308 corresponds to a sequence of data samples and the recurring pattern is basis for one of or a combination of the group of a pilot channel, a reference channel, a synchronization channel, a broadcast channel, or a data channel with broadcast or multicast content.

The central unit 200 shown in Fig. 5 comprises the DSP for processing the reconstructed signal, where the DSP 206 is shown to be outside of the central unit apparatus 20. In other embodiments the central unit apparatus 20 may further comprise means for base band processing the data stream such as the DSP 206. Moreover, in the present embodiment the data stream corresponds to a digitalized radio signal. The means for communicating 22 is operable to communicate with the remote unit 100 using the optical signal.

Fig. 5 depicts the embodiment for the case of uplink transmission. The signal received by the radio head 100 is processed by the A/D converter 104, which performs the sampling. The sampled signal is scanned and the recurring patterns 308 are detected by the remote unit apparatus 10, these samples are indicated by the circles 308 in Fig. 5. At transmission time, only a marker or identifier is sent, which is indicated by the squares 310 in Fig. 5. These identifiers 310 are then exploited to reconstitute the original signal on the DSP 206 or central unit side 200.

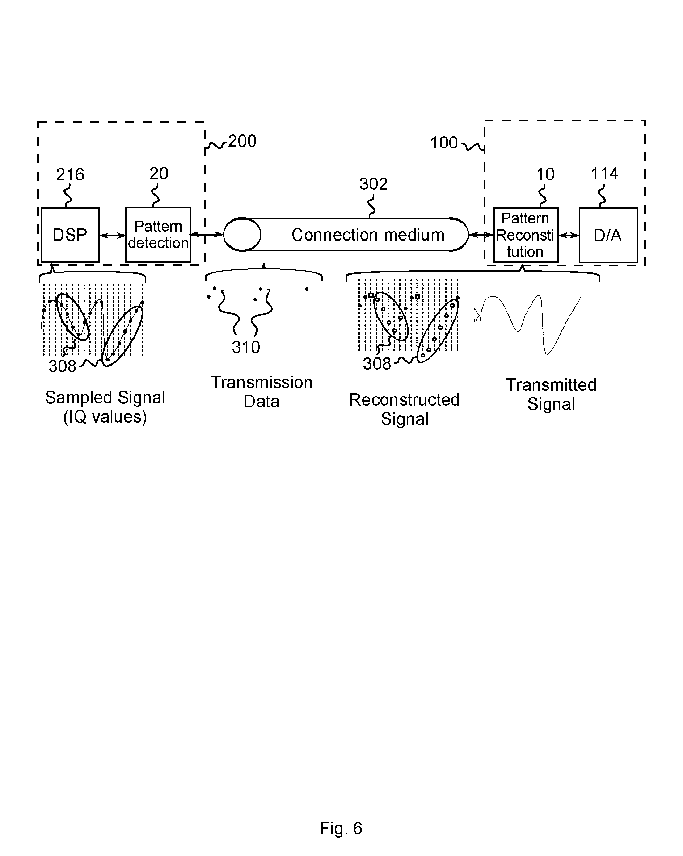

Fig. 6 depicts another embodiment using pattern detection in the downlink. The central unit 200 comprises another DSP 216, which can be the same as DSP 206 in some embodiments, for carrying out at least some base band processing of a radio signal. The central unit 200 further comprises a central unit apparatus 20 for recurring data pattern 308 detection. The central unit apparatus 20 comprises means for identifying the recurring data pattern 308 in the data stream and means for placing a recurring data identifier 310 for the recurring data pattern 308 in the data stream. Hence, the central unit apparatus 20 comprises similar components for downlink processing as the remote unit apparatus 10 comprises for uplink processing and vice versa. The remote unit 100 comprises an accordingly adapted remote unit apparatus 10. The remote unit apparatus 10 further comprises means for identifying an identifier 310 for a recurring data pattern 308 in the data stream and means for placing the recurring data pattern 308 in the data stream based on the identifier 310. The remote unit further comprises a D/A converter 114 for converting the reconstructed signal into a transmit signal. In the embodiment depicted in Fig. 6 the D/A converter 114 is depicted outside the remote unite apparatus 10. In other embodiments the remote unit apparatus 10 can comprise means for converting, such as the D/A converter 114, the data stream from a digital signal to an analog signal before transmitting the analog signal as a radio signal.

Fig. 6 depicts an embodiment for downlink recurring data pattern 308 detection. Embodiments may be operable to use the recurring data pattern detection in either the downlink, or the uplink, or in both directions. Fig. 6 illustrates the recurring data pattern detection when applied to the opposite direction (downlink) as compared to Fig. 5 (uplink), from BBU 200 (DSP processing 216) to radio head 100 (D/A converter 114).

Embodiments as described above and depicted in the figures can be applied to cellular base stations 300. In communication standards like 3G or LTE the A/D/A 104, 114 and DSP 206, 216 can be fundamental elements of the base stations 300, such as e.g. a NodeB in 3G or an eNodeB in LTE. The A/D/A 104, 114 can be part of the Radio Head (RH) 100 component of a base station 300, whilst the DSPs 206, 216 can be part of base band processing, or a BBU, cf. Fig. 2, for example.

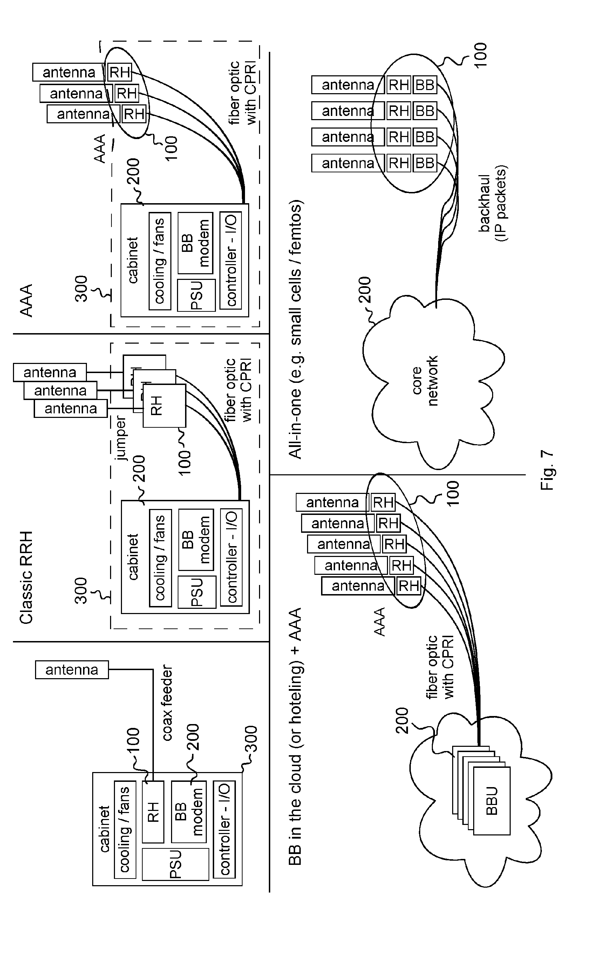

Fig. 7 shows some possible architectural options for embodiments of or within base stations. Fig. 7 shows a base station transceiver 300 at the top on the left. The base station transceiver 300 comprises a RH 100 and BB modem 200 in the same cabinet 300. The base station transceiver 300 further comprises a PSU and cooling means or fans together with a corresponding I/O port for communication with the backhaul and other base stations. The base station transceiver 300 is coupled to an antenna using a coax feeder. Fig. 7 further illustrates other architecture at the top in the center, where the components of a base station transceiver 300 are separated into a remote unit 100 and a central unit 200 in different locations. The central unit 200 comprises a PSU, cooling means/fan, a BB modem, and controller I/O. The central unit 200 is coupled to one or more RH 100, which are further coupled to one or more antennas. The connection between the central unit 200 and the remote unit 100 is established using fiber optic with CPRI. In Fig. 7 at the top right architecture using an Active Antenna Array is depicted. The embodiment is similar to the embodiment shown at top center of Fig. 7 except that the antennas are set up according to a well-defined geometry, such as linear array, circular array, triangular array, etc. The RH 100 can then be coordinated such that a beamforming concept is applied.

Fig. 7 illustrates at the bottom left architecture, where in addition to the previous embodiment the base band processing is carried out in a cloud using multiple BBUs 200. At the bottom right of Fig. 7 architecture is depicted where small or femto cells are established and the remote units 100 comprise some base band processing such that Internet Protocol (IP) packets can be used to transport the received packet to the backhaul for further processing, i.e. wherein the BBUs 200 are distributed in the core network.

Embodiments may provide best benefits in the cases where the BBU 200 and RH 100 are separated. In those cases the interface used between BBU 200 and RRH 100 can be commonly CPRI, which transports digitalized version of the radio signal received by the RRH 100 (uplink) or to be transmitted (downlink). Referring to Fig. 7 this may happen in case of "classic" RRH 100 architecture (top left, center), AAA (top right), AAA+ with base band in the cloud, pooling or hoteling (bottom left and right).

As mentioned above, pilot and synchronization signals may comprise recurring data pattern in some embodiments. Communication standards like 3G or LTE make extensive use of pilot and synchronization signals. A Base Station (BS) 300 broadcasts these signals to assist the User Equipments (UEs) or mobile transceivers in various operations. One important feature is channel estimation and time/frequency synchronization. These signals are transmitted very frequently and in well-known (standardized) patterns that vary little over time. They may not vary during regular operation at all, but only when important and rare reconfigurations are performed.

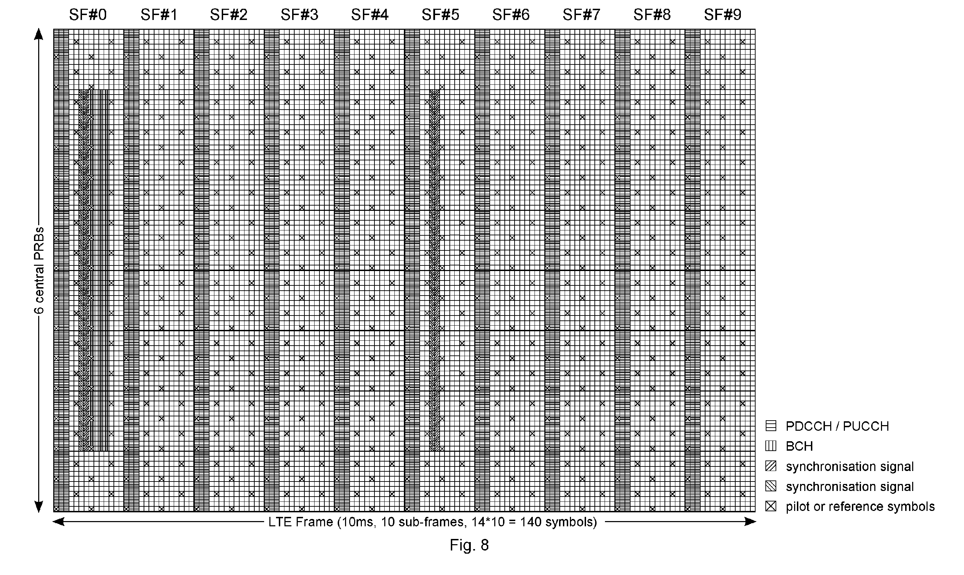

As an example, Fig. 8 shows the structure of an LTE radio frame in an embodiment. The radio frame has duration of 10ms. Fig. 8 illustrates a time frequency grid, where the time axis runs from left to right and extends across 10 sub-frames (SF#0-SF#9) or 140 OFDM symbols. The frequency axis runs from top to bottom and extends across 6 Physical Resource Blocks (PRBs). The cross-marked combinations represent a possible pattern of transmitted pilots, or reference signals in LTE terminology. In the simplest case, pilots are transmitted 4 times per sub-frame, each 250µs. Fig. 8 also shows the synchronization signals, represented by diagonally hachured combinations in sub-frame #0 and sub-frame #5. Synchronization signals are transmitted less frequently than pilots, but share the same characteristic of being well known and of varying very little.

For example, referring to Figs. 3 and 4, pilots and synchronization signals are generated by the DSP 206 of the right-hand side, and sent to the A/D/A 104abc on the left-hand side, occupying bandwidth in the connection medium 302. Embodiments may enable pilot and synchronization signals to be pre-loaded on the A/D/A 104abc side, e.g. by being stored in an Electronically Erasable Programmable Read Only Memory (EEPROM), or being recorded on their first emission and then retransmitted when needed.

Moreover, common signaling can be considered as recurring data pattern in embodiments. Communication standards like 3G or LTE also make extensive use of common signaling channels. For example, a BS 300 may broadcast information that is used by the UEs in various ways. One important use is to obtain system information or description, like BS identifier, operating bandwidth, number of antennas, etc. This is, for example, the case of the well-known Broadcast CHannel (BCH) used by both 3G and 4G/LTE standards. Common signaling channels are transmitted quite frequently and change at slow rate: For example, the information carried by the BCH can vary only when the operation mode of the base stations in reconfigured, a relatively rare event. As an example, Fig. 8 shows the BCH represented by vertically hachured combinations, which are repeated each 10ms.

Referring to Figs. 3 and 4 the BCH can be generated by the DSP 206 of the right-hand side of the picture, and sent to the A/D/A 104abc on the left-hand side, occupying bandwidth in the connection medium. Embodiments may enable common signals to be pre-loaded on the A/D/A 104abc side, e.g. in an EEPROM, or be recorded on their first emission and then retransmitted when needed.

Furthermore, multicast/broadcast contents may be considered for recurring data patterns in embodiments. Communication standards like 3G or LTE use specific "channels" to indicate which terminal can talk, i.e. which mobile transceiver can transmit, in uplink and to which terminals data is transmitted in downlink. These channels are called "map" (in WiMAX) or Physical Downlink Control CHannel (PDCCH) and Physical Uplink Control CHannel (PUCCH) in LTE. These channels may change very often, as the served terminals can change in real time. For example, in Fig. 8 the horizontally hachured combinations represent such channels. In general, these channels may change too often to be easily mapped on recurrent patterns. However, situation may be different in case of broadcast/multicast contents, like TV channels. In this case in fact the frame structure is well known, and the respective "maps" are also well known in advance. In this case recurring data patterns 308 can be easily identified and corresponding identifiers 310 can be applied.

In schemes as depicted in Figs. 3 and 4 the "maps" are generated by the DSP 206 of the right-hand side and sent to the A/D/A 104abc on the left-hand side, occupying bandwidth in the connection medium 302. Embodiments may enable common signals or maps to be pre-loaded on the A/D/A 104abc side, for example using an EEPROM, or be recorded on their first emission and then retransmitted when needed.

Embodiments may use static dictionaries, which can be stored in respective memories. In the embodiments of Figs. 5 and 6, Notable Recurrent Patterns (NRP) 308 could be identified by a static analysis of typical IQ streams, and coded into dictionaries in any suitable format. That way, the transmitting side (either remote unit 100 or central unit 200) would just need to signal the occurrence of one of these NRP using identifiers 310, without the need of sending the entire stream. Embodiments may also make use in a Grateful Degradation (GD) setup, where best-effort NRPs are used when a perfect match does not exists, and therefore introducing controlled signal degradation. If the initial analysis is accurate enough embodiments can be optimized and robust, as the success of GD systems testifies.

Embodiments may further use dynamic dictionaries. In a direct evolution of the previous embodiment, NRPs can be dynamically identified by analyzing the actual transmission stream. This can lead to optimized solutions, even if they require a somewhat more important computing power and some arbitration between the two sides of the connection to synchronize the dictionaries.

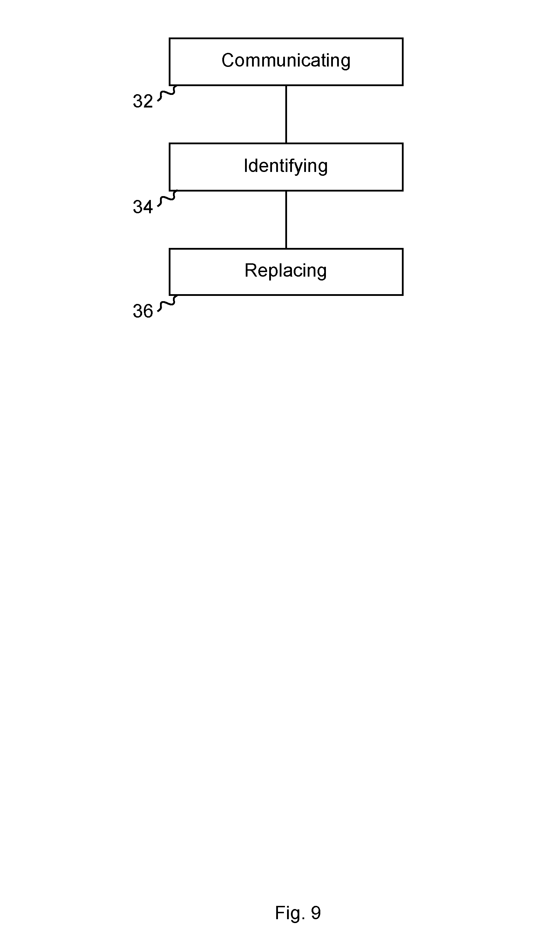

Fig. 9 shows a block diagram of an embodiment of a method for a remote unit 100 of a base station transceiver 300 in a mobile communication system. The base station transceiver 300 may comprise a central unit 200 and the remote unit 100. The method comprises a step of communicating 32 with the central unit 200 of the base station transceiver 300 using a data stream. The method comprises a further step of identifying 34 a recurring data pattern in the data stream and a step of replacing 36 the recurring data pattern with a recurring data pattern identifier in the data stream.

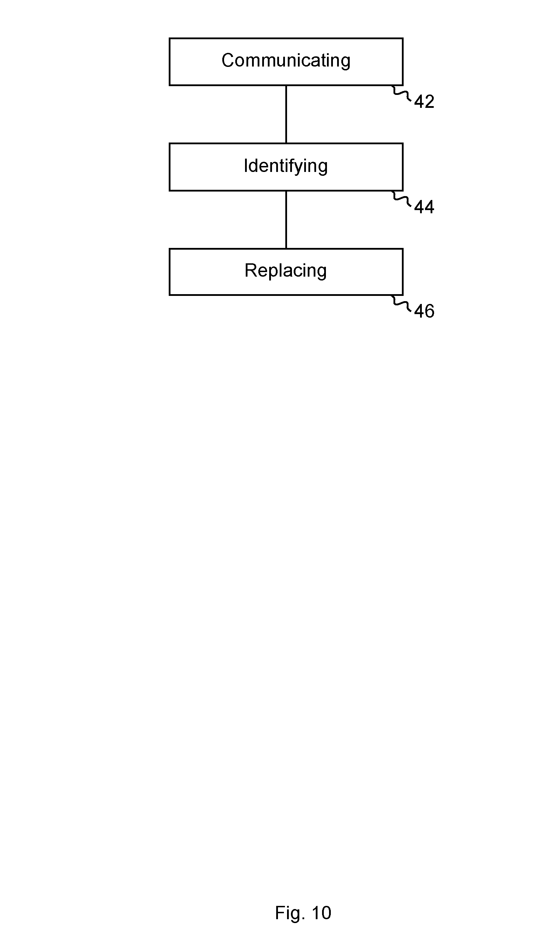

Fig. 10 shows a block diagram of an embodiment of a method for a central unit 200 of a base station transceiver 300 in a mobile communication system. The base station transceiver 300 may comprise the central unit 200 and a remote unit 100. The method comprises a step of communicating 42 with the remote unit 100 of the base station transceiver 300 using a data stream. The method further comprises a step of identifying 44 a recurring data pattern identifier in the data stream and a step of replacing 46 the recurring data pattern identifier with a recurring data pattern in the data stream.

Further embodiments provide a computer program having a program code for performing one of the above methods when the computer program is executed on a computer or processor.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as magnetic disks and magnetic tapes, hard drives, or optically readable digital data storage media. The embodiments are also intended to cover computers programmed to perform said steps of the above-described methods or (field) programmable logic arrays ((F)PLAs) or (field) programmable gate arrays ((F)PGAs), programmed to perform said steps of the above-described methods.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

Functional blocks denoted as "means for ..." (performing a certain function) shall be understood as functional blocks comprising circuitry that is adapted for performing or to perform a certain function, respectively. Hence, a "means for s.th." may as well be understood as a "means being adapted or suited for s.th.". A means being adapted for performing a certain function does, hence, not imply that such means necessarily is performing said function (at a given time instant).

The functions of the various elements shown in the Figures, including any functional blocks labeled as "means", "means for communicating", "means for identifying", "means for replacing", "means for placing", "means for converting", etc., may be provided through the use of dedicated hardware, such as "a communicator", "an identifier" , "a replacer", "a placer", "a converter" etc. as well as hardware capable of executing software in association with appropriate software. Moreover, any entity described herein as "means", may correspond to or be implemented as "one or more modules", "one or more devices", "one or more units", etc. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non-volatile storage. Other hardware, conventional and/or custom, may also be included. Similarly, any switches shown in the Figures are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

## Claims

1. An apparatus (10) for a remote unit (100) of a base station transceiver (300) in a mobile communication system, the remote unit apparatus (10) comprising
means for communicating (12) with a central unit (200) of the base station transceiver (300) using a data stream;
means for identifying (14) a recurring data pattern in the data stream; and
means for replacing (16) the recurring data pattern with a recurring data pattern identifier in the data stream.

2. The apparatus (10) of claim 1, further comprising means for identifying an identifier for a recurring data pattern in the data stream and means for placing the recurring data pattern in the data stream based on the identifier.

3. The apparatus (10) of claim 1, wherein the recurring pattern corresponds to a sequence of data samples of a radio signal in the transmission band or in the base band.

4. The apparatus (10) of claim 2, wherein the recurring pattern is basis for one of or a combination of the group of a pilot channel, a reference channel, a synchronization channel, a broadcast channel, or a data channel with broadcast or multicast content.

5. The apparatus (10) of claim 1, further comprising means for converting the data stream from a digital signal to an analog signal before transmitting the analog signal as a radio signal, and/or for converting a received analog radio signal into a digital signal, wherein the means for communicating (12) is operable to communicate at least parts of the digital signal to the central unit (200).

6. The apparatus (10) of claim 1, means for communicating (12) is operable to communicate with the central unit (200) using an optical signal.

7. An apparatus (20) for a central unit (200) of a base station transceiver (300) in a mobile communication system, the central unit apparatus (20) comprising
means for communicating (22) with a remote unit (100) of the base station transceiver (300) using a data stream;
means for identifying (24) a recurring data pattern identifier in the data stream; and
means for replacing (26) the recurring data pattern identifier with a recurring data pattern in the data stream.

8. The apparatus (20) of claim 7, further comprising means for identifying a recurring data pattern in the data stream and means for placing the recurring data identifier for the recurring data pattern in the data stream.

9. The apparatus (20) of claim 7, wherein the recurring pattern corresponds to a sequence of data samples.

10. The apparatus (20) of claim 7, wherein the recurring pattern is basis for one of or a combination of the group of a pilot channel, a reference channel, a synchronization channel, a broadcast channel, or a data channel with broadcast or multicast content.

11. The apparatus (20) of claim 7, further comprising means for base band processing the data stream.

12. The apparatus (20) of claim 7, wherein the data stream corresponds to a digitalized radio signal and/or wherein the means for communicating (22) is operable to communicate with the remote unit (100) using an optical signal.

13. A method for a remote unit (100) of a base station transceiver (300) in a mobile communication system, the method comprising
communicating (32) with a central unit (200) of the base station transceiver (300) using a data stream;
identifying (34) a recurring data pattern in the data stream; and
replacing (36) the recurring data pattern with a recurring data pattern identifier in the data stream.

14. A method for a central unit (200) of a base station transceiver (300) in a mobile communication system, the method comprising
communicating (42) with a remote unit (100) of the base station transceiver (300) using a data stream;
identifying (44) a recurring data pattern identifier in the data stream; and
replacing (46) the recurring data pattern identifier with a recurring data pattern in the data stream.

15. A computer program having a program code for performing one of the methods of claims 13 or 14, when the computer program is executed on a computer or processor.
